# EUROPÄISCHE PATENTSCHRIFT

(11) **EP 2 059 694 B1**
(45) Veröffentlichungstag und Bekanntmachung des Hinweises auf die Patenterteilung: **19.05.2010**
(21) Anmeldenummer: 07802593.9
(22) Anmeldetag: 14.08.2007
(51) Int. Cl.: F16H 57/02

(54) **GETRIEBEANORDNUNG MIT AXIALER SICHERUNG**
TRANSMISSION ARRANGEMENT HAVING AXIAL SECURING ELEMENT
SYSTEME DE TRANSMISSION AVEC MAINTIEN AXIAL

(30) Priorität: 01.09.2006 DE 102006041076
(43) Veröffentlichungstag der Anmeldung: 20.05.2009
(73) Patentinhaber: Robert Bosch GmbH, 70442 Stuttgart (DE)
(72) Erfinder: WINTER, Manfred, 77839 Lichtenau (DE); KURZMANN, Rainer, 77855 Achern (DE); OBERLE, Klaus, 77830 Buehlertal (DE); GOTTSCHALK, Danny Werner, 76593 Gernsbach (DE)
(86) Internationale Anmeldenummer: PCT/EP2007/058385
(87) Internationale Veröffentlichungsnummer: WO 2008/025669

(56) Entgegenhaltungen:
- EP-A- 0 672 812
- DE-A1- 3 330 330
- DE-A1- 10 246 711
- FR-A- 494 111
- FR-A- 2 122 773
- GB-A- 414 965
- US-A- 4 214 568

## Beschreibung

### Stand der Technik

Die Erfindung betrifft eine Getriebeanordnung gemäß dem Oberbegriff des Anspruchs 1.

Derartige Getriebeanordnungen werden beispielsweise bei Verstelleinrichtungen in Kraftfahrzeugen, wie elektrischen Fensterhebern oder Schiebedächern, welche mittels eines Elektromotors betrieben werden, eingesetzt. Hierbei wird insbesondere ein Elektromotor verwendet, welcher über ein Getriebe, z.B. das Fenster zwischen einer Öffnungs- und Schließ-Endstellung verstellt. Dabei ist das Getrieberad in der Regel als Mitnehmer ausgebildet und weist eine Schneckenradverzahnung auf, mit der es über eine Antriebsschnecke, die mit dem Elektromotor verbunden ist, angetrieben wird. Auf den Mitnehmer ist eine Seiltrommel aufgesteckt, die das Drehmoment des Elektromotors auf ein Fensterhebelsystem überträgt. Aufgrund des Steigungswinkels der Schneckenradverzahnung wirkt auf den Mitnehmer eine Axialkraft, so dass eine Sicherung gegen axiales Verschieben des Getrieberades auf der Achse oder Welle vorgesehen werden muss. Die Achse oder die Welle, auf der das Getrieberad angeordnet ist, ist in der Regel aus Metall ausgebildet, wobei die Achse bzw. die Welle an einem Gehäuse aus Kunststoff fixiert ist. Zur Realisierung der Sicherung gegen axiales Verschieben ist es bekannt, einen Sicherungsring in einer Umfangsnut der Achse bzw. Welle vorzusehen, so dass sich das Getrieberad an diesem Sicherungsring in axialer Richtung abstützen kann. Nachteilig bei der bekannten Getriebeanordnung ist es, dass diese aufgrund der Ausbildung der Achse bzw. der Welle aus Metall ein relativ hohes Gewicht aufweist. Ferner ist die drehfeste Fixierung der Metallachse bzw. die Lagerung der drehenden Metallwelle an dem Kunststoffgehäuse aufwändig.

Die FR-A-494111, die die Merkmale des Oberbegriffs des Anspruchs 1 offenbart, zeigt eine Getriebeanordnung, bei dem ein Getrieberad mittels einer Schraube axial auf eine Welle fixiert ist. Dabei ist radial innerhalb des Getrieberades ein Formteil angeordnet, das zusammen mit einer Anschlagsscheibe, die mit dem Schraubenkopf gesichert ist, einen axialen Anschlag für das Getrieberad bildet.

### Offenbarung der Erfindung

Technische Aufgabe

Der Erfindung liegt daher die Aufgabe zugrunde, eine Getriebeanordnung mit reduzierterem Gewicht sowie mit geeigneten axialen Sicherungsmitteln vorzuschlagen.

### Technische Lösung

Diese Aufgabe wird mit den Merkmalen des Anspruchs 1 gelöst. Vorteilhafte Weiterbildungen der Erfindung sind in den Unteransprüchen angegeben.

Der Erfindung liegt der Gedanke zugrunde, die Achse oder die Welle aus Kunststoff auszubilden. Bevorzugt ist die Achse einstückig mit einem Getriebegehäuse ausgebildet, so dass ein ansonsten notwendiger Befestigungsschritt und ein separates Bauteil entfallen kann. Die für Metallachsen bzw. Metallwellen bekannte Axialsicherung in Form eines Sicherungsrings eignet sich bei Achsen bzw. Wellen aus Kunststoff nicht, da die Nut, die zur Halterung des Sicherungsrings notwendig ist, aus werkzeugtechnischer Sicht nicht bzw. nur mit sehr großem Aufwand realisierbar ist. Ferner müsste aufgrund der geringeren Festigkeit des Kunststoffs gegenüber Metall mit einem Ausschlagen der Nut und daher mit einem zunehmenden Axialspiel des Getrieberades gerechnet werden. Daher wird gemäß der Erfindung anstelle eines in einer Nut aufgenommenen Sicherungsrings ein mindestens einen Axialanschlag zur Abstützung des Getrieberades umfassendes Formteil vorgesehen, wobei das Formteil mittels einer Schraube, insbesondere mittels einer Metallschraube, gegen ein axiales Verschieben an der Kunststoffachse oder der Kunststoffwelle gesichert ist. Die Gefahr eines Ausschlagens der erfindungsgemäßen Axialsicherung im Betrieb besteht dann nicht. Bei Bedarf kann das Getrieberad zweiteilig ausgeführt werden, wie dies beispielsweise aus der DE 102 46 711 A1 bekannt ist, um Dämpfungselemente zur Dämpfung der Getriebebauteile in Umfangsrichtung vorzusehen. Bevorzugt wird die Schraube stirnseitig in die Achse bzw. die Welle hineinverschraubt, wodurch das Formteil zwischen Schraubenkopf und Achse bzw. Welle kraftschlüssig gehalten wird. Der Axialanschlag wird dann von einem radial über den Außenumfang der Achse bzw. Welle herausragenden Teilabschnitt des Formteils gebildet, gegen den sich das einstückige oder mehrstückige Getrieberad in axialer Richtung direkt oder indirekt abstützen kann.

In Weiterbildung der Erfindung ist mit Vorteil vorgesehen, dass die Schraube zur Fixierung des Formteils an der Achse bzw. Welle als Gewindefurchschraube ausgebildet ist. Hierdurch ist es nicht notwendig, bei der Fertigung der Achse bzw. der Welle bereits ein Innengewinde zur Aufnahme der Schraube vorzusehen, was die Fertigung wesentlich vereinfacht. Es reicht aus, ein Sackloch mit, insbesondere glatter, innerer Umfangswand vorzusehen, in die die Schraube bei der Montage ein Innengewinde schneidet.

Erfindungsgemäß ist vorgesehen, dass das Formteil, samt der Schraube in einer stirnseitigen Ausnehmung der Achse oder der Welle aufgenommen ist. Hierdurch ragen die Fixierungsmittel in axialer Richtung nicht über die Achse bzw. Welle hervor, wodurch ohnehin knapper Bauraum eingespart werden kann.

Gemäß einer zweckmäßigen Weiterbildung der Erfindung ist vorgesehen, dass der Axialanschlag zur unmittelbaren Anlage bzw. Abstützung des Getrieberades als, vorzugsweise umfangsgeschlossener, Ringabschnitt des Formteils ausgebildet ist. Gemäß einer alternativen Ausgestaltung kann der Axialanschlag zur unmittelbaren Abstützung des Getrieberades auch als separates Ringteil ausgebildet werden, welches sich wiederum an dem Formteil bzw. an einem Axialanschlag des Formteils abstützt. Im letzteren Fall dient das Formteil zur indirekten, d.h. mittelbaren, axialen Abstützung des Getrieberades. Durch die ringförmige Ausbildung des direkten Axialanschlags wird eine möglichst große Anschlagfläche bereitgestellt, wodurch die Flächenlast reduziert werden kann.

Um den Durchtritt von Feuchtigkeit zwischen der Achse bzw. Welle und das Getrieberad in den dahinterliegenden Bereich zu vermeiden, ist in Ausgestaltung der Erfindung um die Achse bzw. der Welle herum eine Ringdichtung vorgesehen, die vorzugsweise auf einer Ringfläche des Getrieberades aufliegt und radial sowohl gegen das Getrieberad als auch gegen die Achse bzw. Welle drückt. Um eine optimale Dichtungspressung zu realisieren, ist in Weiterbildung der Erfindung vorgesehen, dass der Ringabschnitt oder das separate Ringteil zur Dichtungspressung verwendet wird. Hierdurch hat der Ringabschnitt bzw. das Ringteil eine Doppelfunktion. Zum einen dient er als unmittelbarer, direkter Axialanschlag für das Getrieberad und gleichzeitig zur Dichtungspressung der Ringdichtung. Zur axialen Abstützung des Ringabschnitts bzw. des Ringteils ist mit Vorteil eine radiale Nase am Formteil vorgesehen. Diese ragt in radialer Richtung über den Außenumfang der Achse bzw. Welle hervor. Je nach Ausführungsform der Erfindung sind die Nasen einstückig mit dem Ringabschnitt ausgebildet oder ausschließlich einstückig mit dem Formteil, wobei sich dann das Ringteil an den Nasen in radialer Richtung unmittelbar abstützt.

Bevorzugt sind drei Nasen vorgesehen, um eine gleichmäßige Abstützung des Ringabschnitts bzw. des Ringteils zu realisieren. Wesentlich ist, dass die Nasen gleichmäßig über den Umfang des Formteils, insbesondere in einem Umfangswinkelabstand von 120° angeordnet sind.

Zur Sicherung des Formteils gegen ein Verdrehen, ist in Ausgestaltung der Erfindung vorgesehen, dass für jede Nase ein Radialschlitz in der Umfangswand der stirnseitigen Ausnehmung vorgesehen ist, in welcher das Formteil, zumindest teilweise aufgenommen ist. Aus den Radialschlitzen ragen die Nasen in radialer Richtung hervor und bilden einen Axialanschlag für den Ringabschnitt, bzw. für das Ringteil und damit für das Getrieberad. Bevorzugt liegen die Nasen im montierten Zustand auf dem Schlitzboden auf, werden also von dem Schraubenkopf in Richtung Schlitzboden kraftbeaufschlagt.

Zur verbesserten Findung der Radialschlitze bei der Montage, ist in Ausgestaltung der Erfindung vorgesehen, dass die Radialschlitze im axial vorderen Teil gefast ausgebildet sind, wodurch Einlaufschrägen für die Nasen gebildet werden.

Damit die Achse oder die Welle Querkräfte verbessert aufnehmen kann, ist in Ausgestaltung der Erfindung eine Radialabstützung für die Achse bzw. Welle vorgesehen. Bevorzugt ist die Radialabstützung als Formloch in einen Lagerteil ausgebildet, in die die Achse bzw. Welle in axialer Richtung eingreift.

### Kurze Beschreibung der Zeichnungen

Weitere Vorteile und zweckmäßige Ausführungen der Erfindung sind in den weiteren Ansprüchen, der Figurenbeschreibung und den Figuren angegeben. Es zeigen:
- Fig. 1:: eine geschnittene, ausschnittsweise Explosionsdarstellung einer Getriebeanordnung,
- Fig. 2:: eine geschnittene Ansicht der montierten Getriebe-anordnung gemäß Fig. 1,
- Fig. 3:: eine Seitenansicht der montierten Getriebeanordnung,
- Fig. 4:: eine Draufsicht auf die montierte Getriebeanordnung,
- Fig. 5:: ein weiteres Ausführungsbeispiel einer Getriebeanordnung in Explosionsdarstellung, und
- Fig. 6:: die in Fig. 5 gezeigte Getriebeanordnung im montierten Zustand.

### Ausführungsformen der Erfindung

In den Figuren sind gleiche Bauteile und Bauteile mit gleicher Funktion mit den gleichen Bezugszeichen versehen.

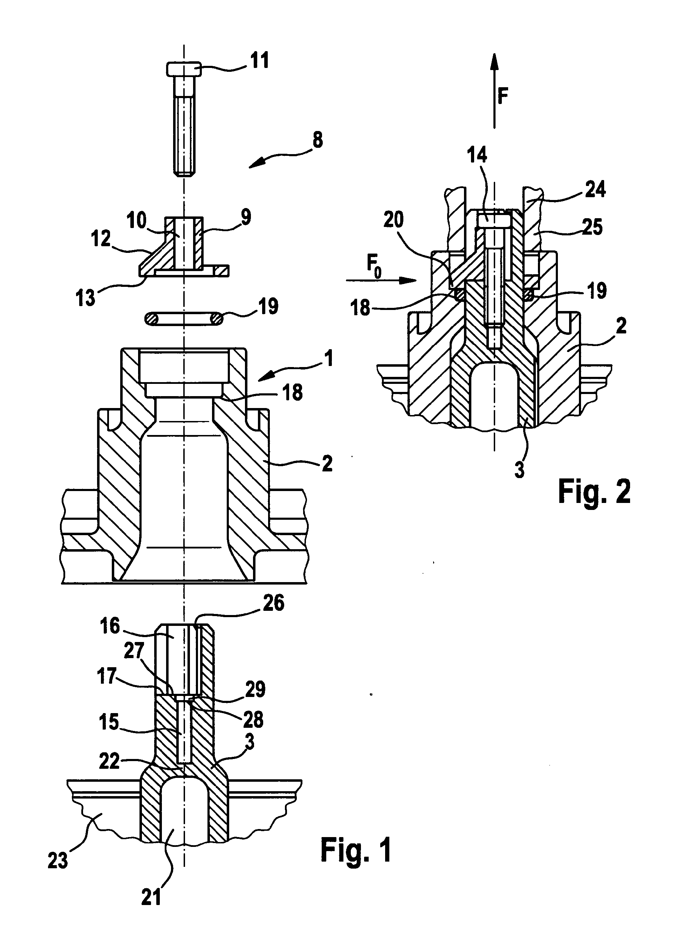

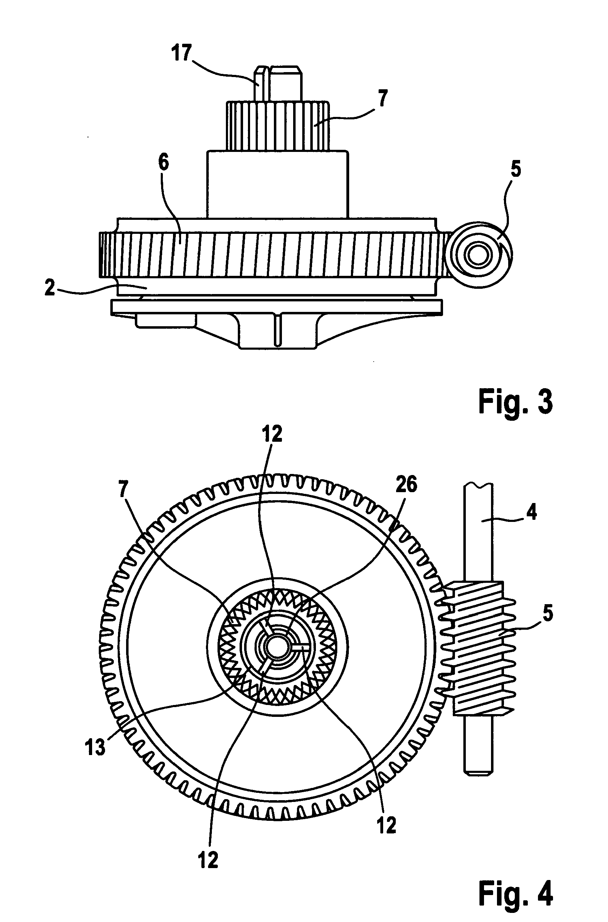

Zunächst wird das Ausführungsbeispiel gemäß den Fig. 1 bis 4 erläutert. In den Figuren ist eine Getriebeanordnung 1 dargestellt. Diese weist ein als Mitnehmer ausgebildetes Getrieberad 2 auf, welches auf einer als Bolzen ausgebildeten Achse 3 drehbar gelagert ist. Eine drehfest auf einer Motorwelle 4 angeordnete Schnecke 5 kämmt mit einer Schneckenradverzahnung 6 am großen Außenumfang des Getrieberades 2, wodurch das Getrieberad 2 in Drehung versetzt wird. Mit axialem Abstand zu der Schneckenradverzahnung 6 ist eine Außenverzahnung 7 mit geringem Umfang vorgesehen, auf die eine nicht dargestellte Seiltrommel eines Fensterhebemechanismus aufsteckbar ist. Diese wird über das Getrieberad 2 in Rotation versetzt und verstellt auf diese Weise ein Fenster zwischen seinen Endstellungen.

Aufgrund der Steigung der Schneckenradverzahnung 6 wirkt auf das Getrieberad 2 eine Axialkraft F. Um eine daraus resultierende mögliche axiale Bewegung des Getrieberades 2 zu verhindern sind axiale Sicherungsmittel 8 vorgesehen, die nach der Montage (Fig. 2) an der Achse 3 aus Kunststoff gehalten sind.

Die Sicherungsmittel umfassen ein Formteil 9 mit einem Durchgangsloch 10 zur Aufnahme einer als Gewindefurchschraube ausgebildeten Schraube 11. Das Formteil 9 weist drei um 120° in Umfangsrichtung versetzt angeordnete in radialer Richtung abstehende Nasen 12 auf, die abgeschrägt nach radial innen auf die Umfangswand des Durchgangsloches 10 zulaufen. In der Zeichnungsebene unterhalb der radialen Nasen 12 ist ein umfangsgeschlossener Ringabschnitt 13 vorgesehen, der, wie aus Fig. 2 ersichtlich ist, als unmittelbarer Axialanschlag für das Getrieberad 2 dient. Eine innere Schulter 18 des Getrieberades 2 stützt sich in axialer Richtung an dem Ringabschnitt 13 des Formteils 9 ab. Das Formteil 9 wiederum stützt sich in axialer Richtung an dem Schraubenkopf 14 der Schraube 11 ab, welche in ein zentrisches Sackloch 15 in der Achse 3 eingeschraubt ist. Somit wird das Formteil 9 zwischen Schraubenkopf 14 und Achse 3 geklemmt.

Im montierten Zustand ist das Formteil 9 über seine gesamte axiale Erstreckung in einer stirnseitigen Ausnehmung 16 der Achse aufgenommen. Für jede Nase 12 ist ein nach oben axial in der Zeichnungsebene offener Radialschlitz 17 vorgesehen, durch den die Nasen 12 in radialer Richtung über die Umfangskontur der Achse 3 hervorstehen. Die Radialschlitze 17 bilden gleichzeitig eine Verdrehsicherung für das Formteil 9.

Zwischen dem Ringabschnitt 13 und einer inneren Umfangsschulter 18 ist eine Ringdichtung 19 angeordnet, mit deren Hilfe die Achse 3 gegenüber dem Getrieberad 2 abgedichtet ist. Im montierten Zustand presst der Ringabschnitt 13 des Formteils 9 die Ringdichtung 19 in ihren Dichtsitz. Die Pressung der Dichtung ist aufgrund der Auflage auf der Umfangsschulter 20 des Getrieberades exakt definiert.

Aus den Fig. 1 und 2 ist ersichtlich, dass zwischen Sackloch 15 und einem Trockenraum 21 im Inneren der Hohlachse 3 eine Sperrwand 22 vorgesehen ist, mittels derer das Durchdringen von Wasser oder Feuchtigkeit vom Nassraum (Sackloch 15) in den Getrieberaum (Trockenraum 21) vermieden wird.

Aufgrund der erfindungsgemäßen Ausbildung der Achse 3 aus Kunststoff, ist es möglich, die Achse 3 einstückig mit einem Getriebegehäuse 23 aus Kunststoff auszubilden.

Zur Kompensation von Querkräften F₀ ist die Achse 3 in einem Formloch 24 (Durchzug) eines Lagerteils 25 aus Kunststoff oder Metall in radialer Richtung abgestützt.

Die Montage der erfindungsgemäßen Getriebeanordnung 1 erfolgt wie folgt. Zunächst wird das Getrieberad 2 auf die Achse 3 aufgeschoben und der Dichtring in seinen Dichtsitz (Schulter 18) eingelegt. Daraufhin wird das Formstück 9 zielgerichtet in die stirnseitige Ausnehmung 16 der Kunststoffachse 3 eingesetzt, wobei jede Nase 12 in den zugehörigen Radialschlitz axial eingleitet. Zur besseren Findung besitzen die Radialschlitze 17 sich in axialer Richtung erstreckende Einlaufschrägen 26. Am Ende des Fügevorgangs liegt der Ringabschnitt mit seiner in der Zeichnungsebene unteren Seite auf der Ringdichtung 19 auf. Gleichzeitig besteht zwischen den drei Nasen und den Schlitzböden 27 noch ein kleiner Spalt. Daraufhin wird die als Gewindefurchschraube ausgebildete Schraube 11 in das Durchgangsloch 10 des Formteils 9 eingesetzt, bis sie auf dem Boden 28 einer zylindrischen Freimachung 29 aufsitzt. Die Schraube 11 wird daraufhin in das zylindrische Sackloch 15 eingedreht, wodurch hierin ein Innengewinde eingefurcht wird. Wenn das Anziehdrehmoment am Ende des Schraubvorgangs erreicht ist, liegen die drei Nasen 12 mit ihrer Unterseite kraftschlüssig an den Schlitzböden 27 an. Gleichzeitig presst der Ringabschnitt 13 auf die Ringdichtung 19.

Beim Einwirken einer axialen Kraft F drückt die Umfangsschulter 20 des Getrieberades 2 gegen den Ringabschnitt 13 des Formteils 9, wodurch das Getrieberad 2 axial gesichert ist, d.h. es kann sich durch ein axiales Funktionsspiel nur radial auf der Achse drehen, nicht aber axial bewegen.

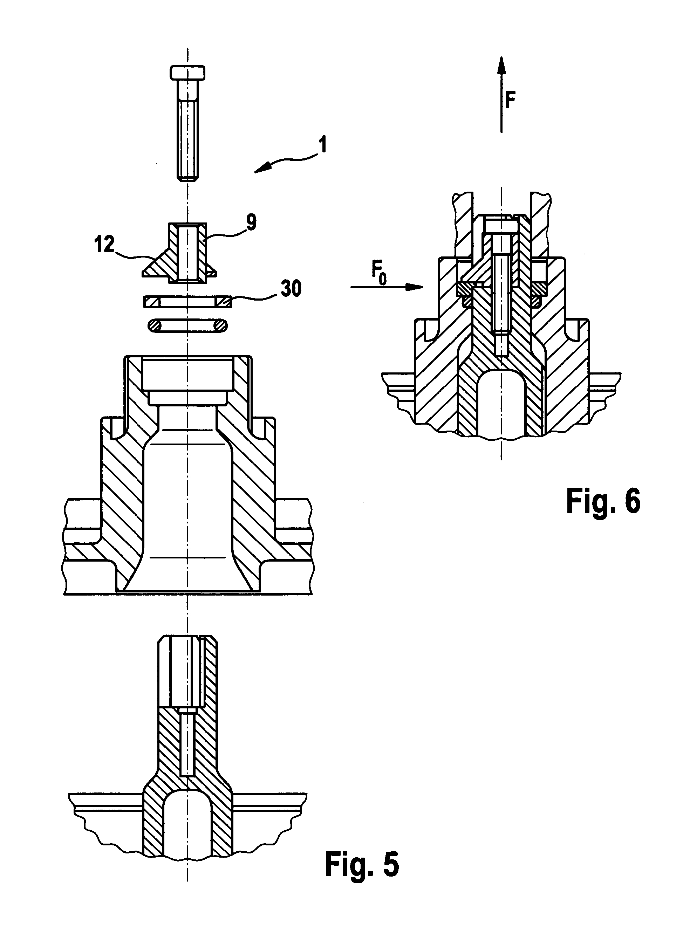

In den Fig. 5 und 6 ist eine alternative Ausführungsform gezeigt. Im Folgenden wird zur Vermeidung von Wiederholungen lediglich auf die Unterschiede zu der zuvor beschriebenen Ausführungsform eingegangen. Bezüglich der Gemeinsamkeiten wird auf die vorherige Beschreibung verwiesen.

Bei dem Ausführungsbeispiel gemäß den Fig. 5 und 6 ist der Ringabschnitt 13 als separates Ringteil 30 ausgebildet. Das Ringteil 30 bildet den eigentlichen Axialanschlag zur direkten, d.h. unmittelbaren Abstützung des Getrieberades 2, wobei sich das Ringteil 30 in axialer Richtung an den Nasen 12 des Formteils 9 abstützt. Das Formteil 9 dient somit zur mittelbaren, d.h. indirekten Abstützung des Getrieberades 2 in axialer Richtung. Ansonsten entspricht die gezeigte Ausführungsform der zuvor beschrieben ersten Ausführungsform.

Aufgrund der erfindungsgemäßen Verschraubung des Formteils 9 mit der Achse 3 bzw. einer Welle wird eine Reparaturlösung geschaffen, da durch Herausdrehen der Schraube 11 das Formstück 9, die Ringdichtung 19, das Getrieberad 2 und gegebenenfalls das separate Ringteil 30 demontiert und anschließend wieder auf die Kunststoffachse 3 bzw. eine Kunststoffwelle montiert werden können.

## Patentansprüche

1. Getriebeanordnung, insbesondere für Verstelleinrichtungen in Kraftfahrzeugen, umfassend ein Getrieberad (2), das mit Hilfe von Sicherungsmitteln (8) gegen ein axiales Verschieben auf einer Achse (3) oder einer Welle gesichert ist, wobei die Sicherungsmittel (8) mindestens ein Formteil (9) umfassen, das mindestens einen Axialanschlag (12, 13, 30) zur direkten oder indirekten axialen Abstützung des Getriebesrades (2) aufweist, und wobei das Formteil (9) mittels einer Schraube (11) gegen ein axiales Verschieben an der Achse (3) oder der Welle gesichert ist,
**dadurch gekennzeichnet, dass** die Achse (3) oder die Welle aus Kunststoff ausgebildet ist, und das Formteil (9) über seine gesamte axiale Länge, inklusive des Schraubenkopfes (14) der Schraube (11), in einer stirnseitigen Ausnehmung (16) der Achse (3) oder der Welle aufgenommen ist.

2. Getriebeanordnung nach Anspruch 1, **dadurch gekennzeichnet, dass** die Schraube (11) eine Gewindefurchschraube ist, die in ein vor der Montage gewindefreies Sackloch (15) eingeschraubt ist.

3. Getriebeanordnung nach Anspruch 2,
**dadurch gekennzeichnet, dass** die Achse (3) oder die Welle als Hohlachse (3) ausgebildet ist, wobei im Inneren der Hohlachse (3) ein Getrieberaum (21) angeordnet ist, der mittels einer Sperrwand (22) gegenüber dem Sachloch (15) abgetrennt ist.

4. Getriebeanordnung nach einem der vorhergehenden Ansprüche,
**dadurch gekennzeichnet, dass** der Axialanschlag von einem, vorzugsweise umfangsgeschlossenen, Ringabschnitt (13) des Formteils oder von einem separaten, vorzugsweise umfangsgeschlossenen, Ringteil (30) gebildet ist.

5. Getriebeanordnung nach Anspruch 4, **dadurch gekennzeichnet, dass** der Ringabschnitt (13) oder das Ringteil (30) auf einer Ringdichtung (19), insbesondere auf einem O-Ring, aufliegt, der die Achse (3) oder die Welle gegenüber dem Getrieberad (2) abdichtet.

6. Getriebeanordnung nach einem der Ansprüche 4 oder 5,
**dadurch gekennzeichnet, dass** der Ringabschnitt (13) oder das Ringteil (30) über mindestens eine radiale Nase (12) des Formteils (9) abgestützt ist.

7. Getriebeanordnung nach Anspruch 6, **dadurch gekennzeichnet, dass** die, vorzugsweise drei, Nasen (12) gleichmäßig über den Umfang des Formteils (9) verteilt angeordnet sind.

8. Getriebeanordnung nach einem der Ansprüche 6 oder 7, **dadurch gekennzeichnet, dass** für jede Nase (12) ein Radialschlitz (17) in der Umfangswand der stirnseitigen Ausnehmung vorgesehen ist, aus dem die Nase (12) in radialer Richtung über die Umfangskontur der Achse (3) oder der Welle hinaus ragt.

9. Getriebeanordnung nach Anspruch 8, **dadurch gekennzeichnet, dass** die Radialschlitze (17) Einlaufschrägen (26) für die Nasen aufweisen

10. Getriebeanordnung nach einem der vorhergehenden Ansprüche,
**dadurch gekennzeichnet, dass** eine Radialabstützung für die Achse (3) oder die Welle vorgesehen ist, die vorzugsweise aus einem Lagerteil (25) mit Formloch (24) besteht.

## Claims

1. Transmission arrangement, in particular for adjustment devices in motor vehicles, comprising a transmission wheel (2) which is secured against axial displacement on an axle (3) or a shaft with the aid of securing means (8), the securing means (8) comprising at least a moulding (9) which has at least one axial stop (12, 13, 30) for the direct or indirect axial support of the transmission wheel (2), and the moulding (9) being secured against axial displacement on the axle (3) or the shaft by means of a screw (11), **characterized in that** the axle (3) or the shaft is produced from plastic, and the moulding (9) is received over its entire axial length, including the screw head (14) of the screw (11), in an end-face recess (16) of the axle (3) or of the shaft.

2. Transmission arrangement according to Claim 1, **characterized in that** the screw (11) is a thread-rolling screw which is screwed into a blind hole (15) which is thread-free prior to mounting.

3. Transmission arrangement according to Claim 2, **characterized in that** the axle (3) or the shaft is designed as a hollow axle (3), there being arranged inside the hollow axle (3) a transmission space (21) which is separated from the blind hole (15) by means of a partition (22).

4. Transmission arrangement according to one of the preceding claims, **characterized in that** the axial stop is formed by a preferably circumferentially closed annular portion (13) of the moulding or by a separate preferably circumferentially closed annular part (30).

5. Transmission arrangement according to Claim 4, **characterized in that** the annular portion (13) or the annular part (30) lies on an annular seal (19), in particular on an O-ring, which seals off the axle (3) or the shaft with respect to the transmission wheel (2).

6. Transmission arrangement according to either one of Claims 4 and 5, **characterized in that** the annular portion (13) or the annular part (30) is supported via at least one radial nose (12) of the moulding (9).

7. Transmission arrangement according to Claim 6, **characterized in that** the preferably three noses (12) are arranged so as to be distributed uniformly over the circumference of the moulding (9).

8. Transmission arrangement according to either one of Claims 6 and 7, **characterized in that**, for each nose (12), a radial slot (17) is provided in the circumferential wall of the end-face recess, out of which radial slot the nose (12) projects in the radial direction beyond the circumferential contour of the axle (3) or of the shaft.

9. Transmission arrangement according to Claim 8, **characterized in that** the radial slots (17) have run-in slopes (26) for the noses.

10. Transmission arrangement according to one of the preceding claims, **characterized in that** a radial support, which preferably consists of a bearing part (25) with a shaped hole (24), is provided for the axle (3) or the shaft.

## Revendications

1. Agencement de transmission, notamment pour systèmes de réglage dans des véhicules automobiles, comprenant une roue de transmission (2), qui est fixée à l'aide de moyens de fixation (8) contre tout déplacement axial sur un axe (3) ou un arbre, les moyens de fixation (8) comprenant au moins une pièce moulée (9) qui présente au moins une butée axiale (12, 13, 30) pour le support axial direct ou indirect de la roue de transmission (2), la pièce moulée (9) étant fixée au moyen d'une vis (11) contre un déplacement axial sur l'axe (3) ou l'arbre,
**caractérisé en ce que** l'axe (3) ou l'arbre se compose de plastique, et la pièce moulée (9) est reçue sur toute sa longueur axiale, y compris la tête de vis (14) de la vis (11), dans un évidement frontal (16) de l'axe (3) ou de l'arbre.

2. Agencement de transmission selon la revendication 1, **caractérisé en ce que** la vis (11) est une vis autotaraudante filetée, qui est vissée dans un trou borgne (15) non fileté avant le montage.

3. Agencement de transmission selon la revendication 2, **caractérisé en ce que** l'axe (3) ou l'arbre est réalisé sous forme d'axe creux (3), un espace de transmission (21) étant disposé à l'intérieur de l'axe creux (3), lequel est séparé au moyen d'une paroi d'arrêt (22) par rapport au trou borgne (15).

4. Agencement de transmission selon l'une quelconque des revendications précédentes, **caractérisé en ce que** la butée axiale est formée par une portion annulaire (13), de préférence de circonférence fermée, de la pièce moulée ou par une partie annulaire (30) séparée, de préférence de circonférence fermée.

5. Agencement de transmission selon la revendication 4, **caractérisé en ce que** la portion annulaire (13) ou la partie annulaire (30) repose sur une garniture d'étanchéité annulaire (19), notamment un joint torique, qui étanchéifie l'axe (3) ou l'arbre par rapport à la roue de transmission (2).

6. Agencement de transmission selon l'une quelconque des revendications 4 ou 5, **caractérisé en ce que** la portion annulaire (13) ou la partie annulaire (30) est supportée par le biais d'au moins un nez radial (12) de la pièce moulée (9).

7. Agencement de transmission selon la revendication 6, **caractérisé en ce que** les, de préférence trois, nez (12) sont répartis uniformément sur la circonférence de la pièce moulée (9).

8. Agencement de transmission selon l'une quelconque des revendications 6 ou 7, **caractérisé en ce que** pour chaque nez (12), on prévoit une fente radiale (17) dans la paroi circonférentielle de l'évidement frontal, hors de laquelle le nez (12) dépasse dans la direction radiale au-delà du contour circonférentiel de l'axe (3) ou de l'arbre.

9. Agencement de transmission selon la revendication 8, **caractérisé en ce que** les fentes radiales (17) présentent des biseaux d'entrée (26) pour les nez.

10. Agencement de transmission selon l'une quelconque des revendications précédentes, **caractérisé en ce qu'**un support radial est prévu pour l'axe (3) ou l'arbre, lequel se compose de préférence d'une partie de palier (25) avec un trou façonné (24).
